Europäisches Patentamt

European Patent Office

Office européen des brevets

(11) Veröffentlichungsnummer: **0 291 538 B1**

# (12) EUROPÄISCHE PATENTSCHRIFT

(45) Veröffentlichungstag der Patentschrift:
28.11.90

(51) Int. Cl.$^5$: **B01D 33/00**

(21) Anmeldenummer: **87106976.1**

(22) Anmeldetag: **14.05.87**

(54) **Verfahren und Vorrichtung zum kontinuierlichen Filtrieren von Flüssigkeiten.**

(43) Veröffentlichungstag der Anmeldung:
**23.11.88 Patentblatt 88/47**

(45) Bekanntmachung des Hinweises auf die Patenterteilung:
**28.11.90 Patentblatt 90/48**

(84) Benannte Vertragsstaaten:
**AT BE CH DE ES FR GB IT LI NL SE**

(56) Entgegenhaltungen:
DE-C- 170 656
FR-A- 2 030 013
US-H- 492 716

(73) Patentinhaber: **MILJOEVERN UMWELT-TECHNIK GMBH,
Bredenscheider Strasse 89, D-4320 Hattingen(DE)**
Patentinhaber: **Schade, Horst Dipl.-Ing., In der Marpe 16,
D-4320 Hattingen(DE)**

(72) Erfinder: **Schade, Horst, In der Marpe 16,
D-4320 Hattingen(DE)**

(74) Vertreter: **Finkener und Ernesti Patentanwälte,
Heinrich-König-Strasse 119, D-4630 Bochum 1(DE)**

## Beschreibung

Die Erfindung bezieht sich auf ein Verfahren zum kontinuierlichen Filtrieren von Flüssigkeiten, insbesondere zum Reinigen von Flüssigkeiten wie beispielsweise Abwässer, und auf eine Vorrichtung zur Durchführung dieses Verfahrens.

Eine Vorrichtung zum Filtrieren von Flüssigkeiten mit einem ringzylindrischen Filtergefäß, in dem eine aus körnigem Material gebildete Filtersäule sich von oben nach unten bewegt, wobei die Filtersäule von der Seite des Rohrflüssigkeitseintritts durch eine Jalousiewand und auf der Seite des Austritts der gefilterten Flüssigkeit durch eine Siebwand begrenzt wird, ist aus der DE-A 1 926 934 bekannt. Das im Zusammenhang mit dieser Vorrichtung beschriebene Verfahren basiert u.a. darauf, daß der Filterprozeß in der Filtersäule, die bei der Filtration in ruhendem Zustand ist, in notwendigen Intervallen abgebrochen und während der Unterbrechung in vertikaler Richtung nach oben strömende Spülflüssigkeit eingeführt wird. Dadurch soll das körnige Material der Filtersäule gelockert und das verunreinigte Material nach Abstellen der Spülflüssigkeit in den oberen Teil der Filtersäule gefördert werden.

Die FR-A 2 030 013 zeigt ein ringzylindrisches Filtergefäß dieser Art, welches zum kontinuierlichen Filtrieren von Flüssigkeiten einsetzbar ist. Auch bei diesem Filtergefäß wandert die aus einem körnigen Material bestehende Filtersäule in einem Ringraum von oben nach unten. Dabei ist der aufrecht stehende Ringraum innen und außen von flüssigkeitsdurchlässigen Wandungen begrenzt. Die zu reinigende Flüssigkeit wird in den Innenraum eingeleitet und strömt von hier quer zur Bewegung des Filterbettes in einen äußeren Auffangraum. Im Bodenbereich des Filtergefäßes werden die körnigen Teilchen mit Hilfe von Wasserstrahlen, die durch Düsen in aufrecht stehende und im oberen Bereich des Filtergefäßes endende Rohre einströmen, nach oben befördert, wo sie nach dem Austreten aus den Rohren auf die Oberseite der Filtersäule absinken.

Bei einem aus der EP-A 0 002 727 bekannten Verfahren zum kontinuierlichen Filtrieren von Flüssigkeiten wird die Flüssigkeit durch ein nach unten fließendes Bett aus Filtermaterial, welches in einem aufrechtstehenden zylindrischen Ringraum aufrechterhalten wird, von außen radial zur Mitte durch das Bett in den Innenraum eingeleitet und an einer höher gelegenen Stelle in entgegengesetzter Richtung radial nach außen wieder abgezogen. Bei diesem Verfahren wird also die zu filternde Flüssigkeit in zwei nach oben aufeinanderfolgenden Stufen gereinigt. Die zur Durchführung dieses Verfahrens dienende Vorrichtung besteht im wesentlichen aus einem aufrechtstehenden ringzylindrischen Behälterabschnitt zur Aufnahme des Filtermaterials, dessen innere und äußere Zylinderwandung flüssigkeitsdurchlässig ist. Dabei ist die Außenwandung von wenigstens zwei axial übereinanderstehenden Ringmänteln umgeben, die jeder mit der Außenwand des ringzylindrischen Behälterabschnittes eine Ringkammer bilden. Die zu filternde Flüssigkeit tritt in die untere Ringkammer ein, gelangt von hier durch das Filterbett in den Innenraum und von dort an einer höher gelegenen Stelle nach erneutem Durchtritt durch das Filterbett in die obere Kammer, aus der sie als gereinigte Flüssigkeit abgezogen wird.

Weiterhin sind in der Praxis Verfahren und Vorrichtungen zum kontinuierlichen Filtrieren von Flüssigkeiten dieser Art bekanntgeworden. Ein einwandfreier Betrieb eines kontinuierlichen Filterprozesses setzt u. a. ein störungsfreies Einleiten der verschmutzten Flüssigkeit in das aus Filterteilchen gebildete Filterbett voraus. Bei bekannten Vorrichtungen erfolgt das Einleiten in der Regel über flüssigkeitsdurchlässige Wandungen wie beispielsweise Jalousien, Siebgitter oder dergleichen, die verhältnismäßig schnell verstopfen. Bekannt ist auch eine Vorrichtung, bei der durch Vorschalten einer Mikrofiltrationsstufe eine Feinreinigung vorgenommen wird, bei der aber durch Flockungsprozesse auf dem Wege in die aus körnigen Filterteilchen bestehende getrennte zweite Filterstufe weiterhin Verstopfungen auftreten können.

Eine weitere Voraussetzung für einen einwandfreien Betrieb eines kontinuierlichen Filterprozesses ist ein gleichmäßiges Fließen des aus körnigen Filterteilchen bestehenden Bettes. Hier kann es leicht zu Unregelmäßigkeiten in der Fließbewegung und damit zum Entstehen von bevorzugten Fließströmungen kommen, oder an Engstellen können sich unerwünschte Brücken bilden, die ebenso wie die vorgenannten Unregelmäßigkeiten Anlaß für Verstopfungen sein können. Um ein möglichst gleichmäßiges Fließen der körnigen Filterteilchen zu erreichen, hat man bei einer bekannten Vorrichtung im Bereich des Fließweges an mehreren Stellen radiale Leitflügel angebracht, durch die eine gewisse Verbesserung erreicht wurde. Gleichwohl sind auch bei Anwendung solcher Maßnahmen in der Praxis Unregelmäßigkeiten in der Fließbewegung festgestellt worden.

Die Aufgabe der Erfindung besteht demnach darin, ein verbessertes Verfahren zum kontinuierlichen Filtrieren von Flüssigkeiten anzugeben, bei dem die Nachteile der bekannten Verfahren nicht auftreten und darüber hinaus mit einem relativ geringen apparativen Aufwand ein betriebssicheres System erzielbar ist, welches eine erhebliche Steigerung der Leistung und des Filtereffektes ermöglicht. Weiterhin ist die Erfindung auf die Schaffung einer geeigneten Vorrichtung zur Durchführung des neuen Verfahrens gerichtet.

Diese Aufgabe wird erfindungsgemäß durch ein Verfahren in der im Anspruch 1 beschriebenen Art gelöst.

Vorteilhafte Weiterbildungen dieses Verfahrens sind in den Unteransprüchen 2 und 3 beschrieben.

Nach einem wesentlichen Gedanken der Erfindung ist ein Mikro-Filter als Vorfilter dem aus körnigen Filterteilchen bestehenden Filterbett ohne Zwischenraum vorgelagert, wodurch die Möglichkeit besteht, die am Mikro-Filter sich absetzenden Verunreinigungen durch eine ständige hydraulische Reinigung von der Wand des Mikro-Filters abzuspülen und einem darunter liegenden Abzugsraum zuzuführen. Die Reinigung wird hierbei vorteilhafterweise mit Wasserstrahlen bewirkt, die auf der ganzen Höhe des Mikro-Filters aus rotierenden Düsen austreten.

Wie an sich bekannt, wird in einem unteren konusförmigen Teil der Vorrichtung, aus dem die körnigen Filterteilchen abgezogen und nach Regenerierung der Oberseite des Filterbettes wieder zugeführt werden, ein Wirbelbett erzeugt. Dies kann in an sich bekannter Weise durch Einleiten von Wasser in den konusförmigen Teil erfolgen. Für das Abziehen der körnigen Filterteilchen wird zweckmäßigerweise eine bekannte Mammutpumpe (Druckluftheber) eingesetzt. Erfindungsgemäß wird die Druckluft für diese Mammutpumpe anders als es bislang für diese Zwecke üblich ist, impulsweise zugeführt. Durch die pulsierende Zugabe von Druckluft werden im Abzugsraum und darüber innerhalb der körnigen Filterteilchen in Verbindung mit dem zugleich zugeführten Wasser hydraulische Stöße erzeugt, durch die das Entstehen von Brücken wirksam verhindert werden kann. Durch eine geregelte Zugabe von Wasser über eine Ringdüse läßt sich hierbei ein Wirbelbett erzeugen, welches je nach Intensität des Wassers und in Übereinstimmung mit der Pulsfrequenz der Mammutpumpe einen geregelten Abzug der körnigen Filterteilchen ermöglicht.

Die erfindungsgemäße Ausgestaltung der Vorrichtung zur Durchführung des Verfahrens ergibt sich aus Anspruch 4. Eine vorteilhafte weitere Ausgestaltung dieser Vorrichtung ist in dem Anspruch 5 beschrieben.

Die bei der laufenden hydraulischen Reinigung des Mikro-Filters anfallenden Schmutzteilchen gelangen über den offenen Ringspalt zwischen der Rohrwand der Mammutpumpe und der inneren Trichterwand in den Abzugsraum, der mit körnigen Filterteilchen angefüllt ist, d.h. an einer Stelle unterhalb des eigentlichen Filterbereiches in den Kreislauf der körnigen Filterteilchen, so daß die Schmutzteilchen zugleich mit diesen abgezogen und bei der Regenerierung der körnigen Filterteilchen entfernt werden können.

Ein Ausführungsbeispiel einer Vorrichtung zum kontinuierlichen Filtrieren von Flüssigkeiten zur Durchführung des Verfahrens gemäß der Erfindung ist in der Zeichnung dargestellt und wird nachfolgend näher erläutert. Es zeigt in schematischer Form:

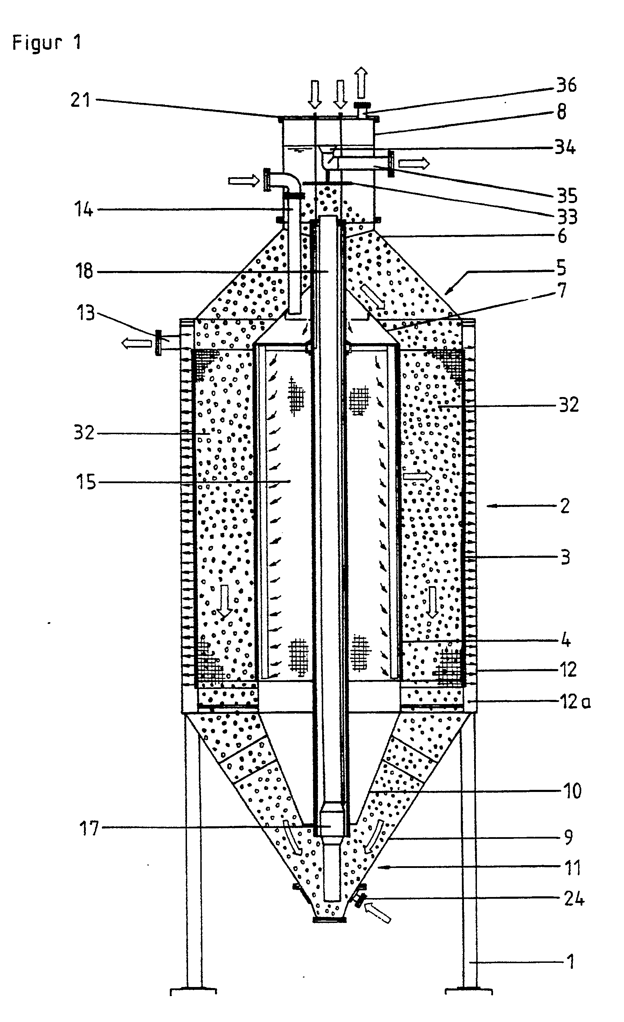

Fig. 1 einen Vertikalschnitt einer Vorrichtung gemäß der Erfindung,

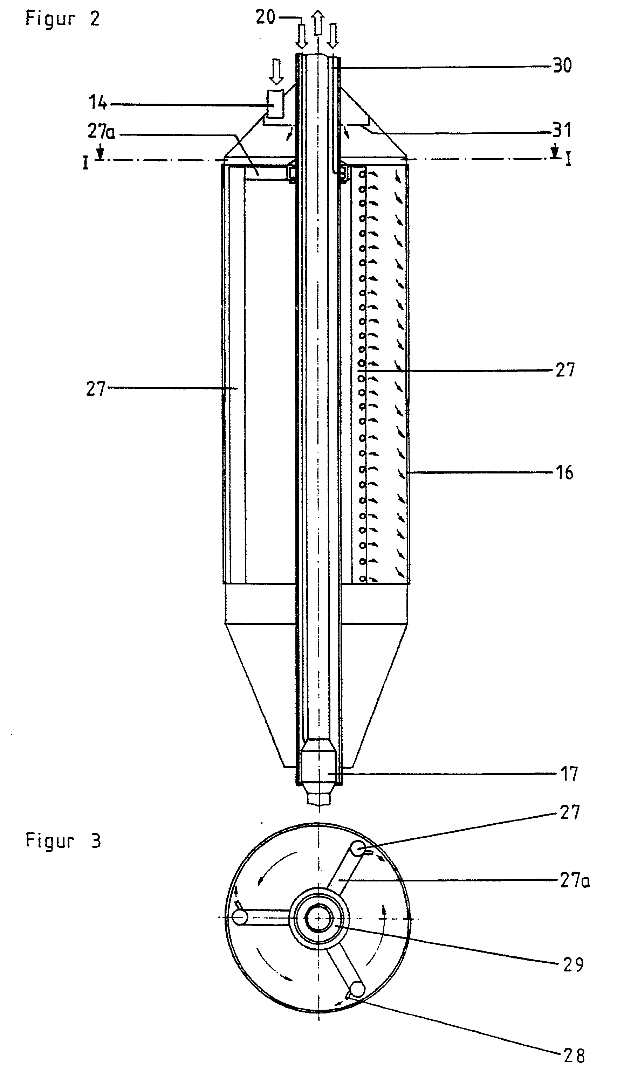

Fig. 2 einen Vertikalschnitt des inneren Ringraumes mit einem hydraulischen Düsensystem in einem größeren Maßstab,

Fig. 3 einen Querschnitt im Bereich des Innenraumes der Vorrichtung in der Ebene der Linie I-I der Fig. 2 und

Fig. 4 einen Vertikalschnitt im Bereich des konusförmigen Abzugsraumes in einem größeren Maßstab.

Die als Ausführungsbeispiel dargestellte Vorrichtung hat im wesentlichen die Gestalt eines aufrechtstehenden zylindrischen Behälters, der auf Stützen (1) ruht. Hauptbestandteil des Behälters ist ein ringzylindrischer Behälterabschnitt (2) mit einer zylindrischen Außenwand (3) und einer koaxialen zylindrischen Innenwand (4). An der Oberseite sitzt auf dem ringzylindrischen Behälterabschnitt (2) ein konusförmiger Kopfteil (5), der aus zwei Trichterwänden (6, 7) gebildet ist. Auf der äußeren Trichterwand (6) ruht an ihrem oberen Ende ein zylindrischer Dom (8).

An seinem unteren Ende geht der ringzylindrische Behälterabschnitt (2) ebenfalls in einen aus zwei Trichterwänden (9, 10) gebildeten unteren Konusteil (11) über.

Die Wandungen (3, 4) des ringzylindrischen Behälterabschnittes sind flüssigkeitsdurchlässig ausgebildet und köhnen beispielsweise aus gelochten Blechen bestehen Umgeben ist der ringzylindrische Behälterabschnitt (2) von einem Mantel (12), der einen radialen Abstand von der Wandung (3) einhält, so daß ein freier Ringraum vorhanden ist, der oben und unten abgeschlossen ist. Am oberen Ende des ringzylindrischen Behälterabschnittes (2) ist im Mantel (12) ein Auslaßstutzen (13) angebracht, aus dem die gefilterte Flüssigkeit austritt. Die zu reinigende Flüssigkeit wird über ein Rohr (14) in den inneren Hohlraum (15) des ringzylindrischen Behälterabschnittes (2) eingeleitet.

An der inneren flüssigkeitsdurchlässigen Wandung (4) liegt an ihrer inneren Mantelfläche auf ihrer ganzen axialen Höhe ein Siebgewebe (16) mit einer Maschenweite von 10 bis 200 μ an. Die Wandung (4) dient dabei zum Halten und Stützen des Siebgewebes (16). Anstelle eines Siebgewebes kann auch ein anderes Gebilde benutzt werden, welches sich dazu eignet, die Funktion eines Mikro-Filters zu erfüllen.

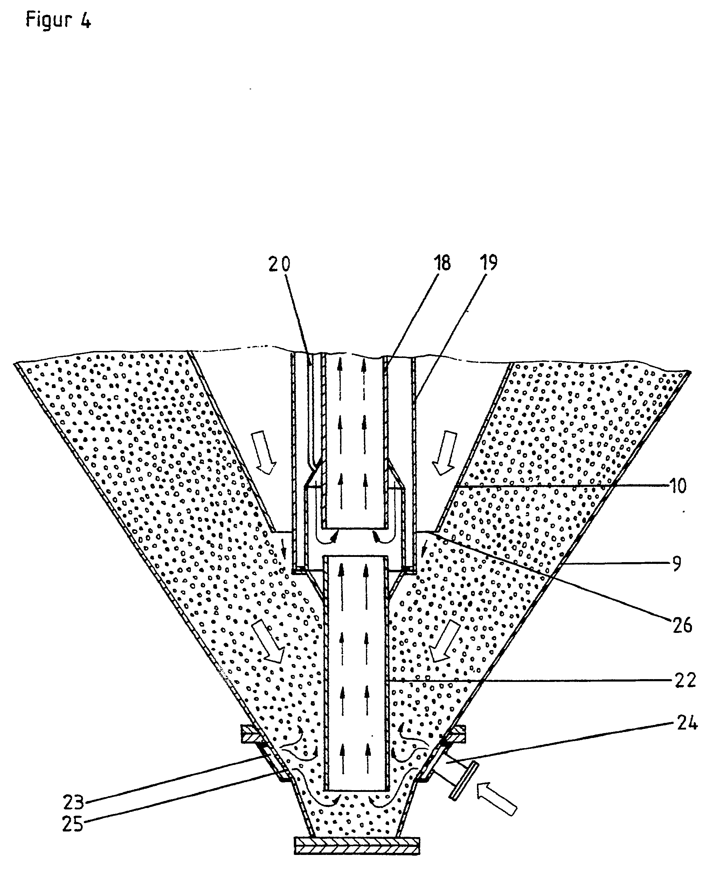

Im Zentrum der Vorrichtung befindet sich eine Mammutpumpe (17), die sich vom oberen Dom (8) bis in den unteren konusförmigen Abzugsraum (11) erstreckt. Einzelheiten über den Aufbau der Mammutpumpe (17) ergeben sich aus Fig. 4. Danach enthält die Mammutpumpe (17) ein inneres Abzugsrohr (18) und ein konzentrisches Außenrohr (19). Im Zwischenraum zwischen diesen beiden Rohren verläuft eine Leitung (20) für die Zufuhr von Druckluft mit einem Druck von beispielsweise 3 bar. Der äußere Anschluß dieser Leitung (20) befindet sich an der Außenseite des Deckels (21) des Domes (8).

Den unteren Abschluß der Mammutpumpe (17) bildet ein konzentrisches Einlaufrohr (22), in welches die körnigen Filterteilchen durch den bei Betrieb der Mammutpumpe hervorgerufenen Sog eingesaugt und von hier mit Hilfe der zugeführten Druckluft durch das Rohr (18) bis in den Dom (8) befördert werden.

Zum Erzeugen eines Wirbelbettes im Abzugsraum (11) ist ein Ringdüsen-system an der äußeren Trichterwand (9) angeordnet. Wesentliche Bestandteile dieses Ringdüsen-systems sind ein umläufender Kanal (23), in den ein Anschlußstutzen (24) für die Zufuhr von Wasser mündet. Im Bereich des Kanals (23) sind in der Trichterwand entlang des gesamten Umfangs eine Anzahl von Bohrungen (25) vorgesehen durch die die zugeführte Flüssigkeit in den Abzugsraum (11) eintritt.

Wie Fig. 4 zeigt, ist am unteren Ende der inneren Trichterwand (10) zwischen dieser und dem Rohr (19) ein Ringspalt (26) freigelassen, durch den die von oben absinkenden Schmutzteilchen in den Abzugsraum (11) gelangen. Damit eine ungestörte Fließbewegung der Teilchen gewährleistet ist, hat die innere Trichterwand (10) eine Neigung von wenigstens 60°.

Um etwaigen Verschmutzungen des Siebgewebes (16) wirksam begegnen zu können, ist im inneren Hohlraum (15) des ringzylindrischen Behälterabschnittes (2) ein hydraulisches Reinigungssystem vorgesehen. Dieses besteht im wesentlichen aus drei mit gleichem Abstand voneinander angeordneten, achsparallelen Rohren (27), die an ihrem oberen Ende an einem drehbar gelagerten Stern (27a) befestigt sind. Jedes der Rohre (27) verläuft in einem geringen parallelen Abstand vom Siebgewebe (16) und enthält eine Anzahl von Austrittsdüsen (28), die mit einer leichten Neigung gegenüber der Tangentialen mit ihrem Austrittsende auf die Mantelfläche des Siebgewebes (16) gerichtet sind. Die Nabe (29) des Drehsterns (27a), die zur drehbaren Lagerung dient, enthält zugleich einen Ringkanal, an den einerseits die Rohre (27) und andererseits ein Rohr (30) für die Zufuhr von Spülwasser angeschlossen sind. Der Druck des Spülwassers wird den Erfordernissen entsprechend gewählt; er kann beispielsweise ca. 6 bar betragen. Wenn dem hydraulischen Reinigungssystem Spülwasser zugeführt wird, bewirkt der Rückstoßeffekt an den Düsen eine selbsttätige gleichmäßige Drehung der Rohre (27), wodurch eine fortlaufende gleichmäßige Besprühung des Siebgewebes (16) erfolgt.

Bei Betrieb der Vorrichtung wird die zu filternde Flüssigkeit über das Rohr (14) und eine gelochte Aufgabescheibe (31) dem inneren Hohlraum (15) gleichmäßig über den Querschnitt verteilt zugeführt. Vom inneren Hohlraum (15) strömt sie durch das Siebgewebe (16) in den anschließenden ringzylindrischen Raum, der mit körnigen Filterteilchen (32) angefüllt ist und von hier weiter in den äußeren Ringraum (12a), aus dem die gefilterte Flüssigkeit durch den Auslaßstutzen (13) austritt. Die schweren und geflockten Schmutzteilchen sinken im inneren Hohlraum (15) nach unten bis zum Ringspalt (26), über den sie in das nach unten fließende Filterbett abgezogen werden. Die Fließbewegung des Filterbettes wird durch den Betrieb der Mammutpumpe (17) bewirkt. Die Zugabe von Druckluft erfolgt dabei impulsweise. In Verbindung mit dem über den Stutzen (24) zugeführten Wasser für die Erzeugung eines Wirbelbettes im Abzugsraum werden hierbei hydraulische Stöße erzeugt, die die Entstehung von Brücken in diesem Bereich verhindern. Durch Regelung der Pulsfrequenz der pulsierend zugeführten Druckluft und der Intensität der Wasserzugabe über das Ringdüsen-system (23, 25) läßt sich der Abzug des körnigen Filtermaterials in gewünschter Weise beeinflussen und steuern.

Die Regenerierung der körnigen Filterteilchen, beispielsweise Sand, erfolgt durch Wasser und Luft während der Förderung in der Mammutpumpe. Das Trennen der körnigen Filterteilchen mit Körnungsabmessungen von beispielsweise 0,4 bis 1 mm vom Schlammwasser vollzieht sich im Dom (8) aufgrund der unterschiedlichen Sinkgeschwindigkeiten. Dabei wird die Verteilung der zugeführten Filterteilchen auf den Querschnitt des Domes (8) mit Hilfe eines Pralltellers (33) bewirkt, während das Schlammwassergemisch über einen trichterförmigen Überlauf (34) und einen anschließenden Stutzen (35) abgeleitet wird. Die Abluft wird im Kopf des Domes bei Druckfilterbetrieb mittels eines Schwimmerventils über einen Stutzen (36) und bei syphonähnlichem Betrieb der Vorrichtung über eine Vakuumpumpe ebenfalls über den Stutzen (36) entfernt, so daß der Wasserspiegel oberhalb des Überlauftrichters (34) gehalten wird. Die ablaufende Schlammwassermenge entspricht in der Größenordnung der durch die Mammutpumpe (17) geförderten Transport- und Waschwassermenge. Soweit eine Regelung erforderlich ist, kann diese mechanisch im Zuge der vom Stutzen (35) ausgehenden Leitung erfolgen. Die Menge beträgt ca. 2 bis 5 % bezogen auf das Filtrierwasser.

**Patentansprüche**

1. Verfahren zum kontinuierlichen Filtrieren von Flüssigkeiten, insbesondere zum Reinigen von Flüssigkeiten wie beispielsweise Abwässer, mittels eines aus körnigen Filterteilchen, beispielsweise Sand, bestehenden Filterbettes, welches sich in einem aufrechtstehenden zylindrischen Ringraum, der von flüssigkeitsdurchlässigen Wandungen begrenzt ist und in einen konusförmigen Abzugsraum mit flüssigkeitsundurchlässigen Wandungen mündet, nach unten bewegt, bei dem die Flüssigkeit durch die Innenwand in den Ringraum eingeleitet und quer zur Bewegung des Filterbettes auf seiner ganzen Höhe durch dieses hindurchgeführt wird, wobei die Filterteilchen aus dem konusförmigen Raum mittels einer Mammutpumpe (Druckluftheber) abgezogen und der Oberseite des Filterbettes wieder zugeführt werden, und wobei durch Einleiten von Wasser im konusförmigen Abzugsraum ein Wirbelbett erzeugt wird, mit folgenden Merkmalen:

an der Innenwand des zylindrischen Ringraumes ist ein Siebgewebe mit einer Maschenweite von 10 bis 200 μm als Mikro-Filter angeordnet,

die an diesem Mikro-Filter sich absetzenden, schweren und geflockten Schmutzteilchen werden nach unten abgeführt und im konusförmigen Abzugsraum in das fließende Filterbett eingeleitet,

das Mikro-Filter wird vom inneren Hohlraum aus laufend hydraulisch gereinigt und

die Mammutpumpe wird durch pulsierende Zugabe von Druckluft betrieben.

2. Verfahren nach Anspruch 1, dadurch gekennzeichnet, daß das Mikro-Filter auf seiner ganzen Höhe mit aus rotierenden Düsen austretenden Wasserstrahlen besprüht wird.

3. Verfahren nach Anspruch 1 oder 2, dadurch gekennzeichnet, daß die Wassermenge für die Erzeugung des Wirbelbettes auf die für die Förderung und Waschung der Filterteilchen benötigte Wassermenge begrenzt wird.

4. Vorrichtung zum kontinuierlichen Filtrieren von Flüssigkeiten zur Durchführung des Verfahrens nach den Ansprüchen 1 bis 3 mit einem aufrechtstehenden ringzylindrischen Behälterabschnitt (2) zur Aufnahme der körnigen Filterteilchen (32), dessen Außen- und Innenwand (3, 4) flüssigkeitsdurchlässig ausgebildet sind und der außen von einem an seinen Enden abgeschlossenen Mantel (12) umgeben ist, bei dem am oberen Ende ein Austritt (13) für die gereinigte Flüssigkeit vorgesehen ist und bei dem sich am unteren Ende des Ringraumes ein aus zwei Trichterwänden (9, 10) gebildeter konusförmiger Abzugsraum (11) anschließt, mit folgenden Merkmalen:

an der Innenwand des zylindrischen Ringraumes ist ein Siebgewebe (16) mit einer Maschenweite von 10 bis 200 µm als Mikro-Filter angeordnet, im inneren Hohlraum (15) des ringzylindrischen Behälterabschnittes (2) sind auf der ganzen Höhe des Mikro-Filters rotierende Düsen zum Besprühen des Mikro-Filters angeordnet,

eine an sich bekannte Mammutpumpe (17) ragt mit ihrem unteren Saugende in den unteren Abschnitt des konusförmigen Abzugsraums (11) hinein, zwischen dem Außenrohr (19) der Mammutpumpe (17) und der inneren Trichterwand (10) ist ein nach unten offener Ringspalt (26) als Schlammeinlauf freigelassen,

die Neigung der inneren Trichterwand (10) beträgt wenigstens 60° und in der äußeren Trichterwand (9) an ihrem unteren Ende ist ein Ringdüsensystem (23, 25) für das Einleiten von Wasser angeordnet.

5. Vorrichtung nach Anspruch 4 dadurch gekennzeichnet, daß im inneren Hohlraum (15) des ringzylindrischen Behälterabschnittes (2) eine Anzahl von achsparallelen Rohren, beispielsweise drei, auf der ganzen Höhe des inneren Hohlraumes (15) angeordnet und an ihrem oberen Ende an einem drehbar gelagerten Stern (27a) befestigt sind, daß an den Rohren (27) auf ihrer ganzen Höhe eine Anzahl von auf das Siebgewebe (16) gerichtete Strahldüsen (28) angebracht sind und daß die Rohre (27) über den Drehstern (27a) mit einer nach außen führenden Zufuhrleitung (30) in Verbindung stehen.

**Claims**

1. Process for the continuous filtering of fluids, more especially for cleansing fluids such as, for example, sewage, by means of a filter bed which is composed of particulate filter particles, for example, sand, and which moves downwards in an upright-standing cylindrical annular space, which is defined by walls penetrable to fluid and opens into a conical outlet space with walls which are impenetrable to fluid, in which the fluid is introduced through the inner wall into the annular space and is led at right angles to the movement of the filter bed through the latter, over its entire height, whereby the filter particles are drawn off from the conical space by means of a mammoth pump (compressed air siphon) and fed again to the top of the filter bed, and whereby a vortex bed is created by introducing water in the conical outlet space, having the following features:

on the inner wall of the cylindrical annular space is arranged a sieve grid with a mesh width of 10 to 200 µm as a microfilter,

the heavy and flocculated dirt particles settling on this microfilter are led away downwards and are introduced into the flowing filter bed in the conical outlet space, the microfilter is constantly hydraulically cleansed from the inner cavity, and the mammoth pump is operated by the pulsating addition of compressed air.

2. Process as claimed in Claim 1, characterized in that the microfilter is sprinkled over its entire height with water jets emerging from rotating nozzles.

3. Process as claimed in Claim 1 or Claim 2, characterized in that the quantity of water for creating the vortex bed is limited to the quantity of water required for the conveyance of the filter particles.

4. Device for the continuous filtering of fluids in order to carry out the process as claimed in Claims 1 to 3, with an upright-standing annular-cylindrical container portion (2) for accepting the particulate filter particles (32), whose outer and inner wall (3 and 4) is constructed so as to be permeable to fluid, and which is surrounded on the outside by a casing (12) which is sealed at its ends, in which an outlet (13) for the cleansed fluid is provided at the top end and in which a conical outlet space (11) composed of two funnel walls (9 and 10) is connected to the bottom end of the annular space, having the following features:

a sieve grid (16) with a mesh width of 10 to 200 µm is arranged as a microfilter on the inner wall of the annular-cylindrical space,

in the inner cavity (15) of the annular-cylindrical container portion (2), rotating nozzles for sprinkling the microfilter are arranged over the entire height of the microfilter,

a known 'per se' mammoth pump (17) projects with its bottom suction end into the bottom-section of the conical outlet space (11), Between the outer tube (19) of the mammoth pump (17) and the inner funnel wall (10) an annular gap (26) which is downwardly open is left vacant as a sludge inlet, the inclination of the inner funnel wall (10) amounts to at least 60°, and an annular nozzle system (23 and 25) for the introduction of water is arranged at the bottom end of the outer funnel wall (9).

5. Device as claimed in Claim 4, characterized in that a number of axially parallel tubes, for example, three, are arranged in the inner cavity (15) of the annular-cylindrical container portion (2) over the entire height of the inner cavity (15), and are fastened at their top end to a rotatably mounted star fixture (27a), that a number of supply pressure jets (28) which are pointed towards the sieve grid (16) are fixed over the entire height of the tubes (27), and that the tubes (27) are in communication via the star fixture (27a) with an outwardly leading supply line (30).

**Revendications**

1. Procédé pour filtrer des liquides en continu, en particulier pour épurer des liquides comme par exemple des eaux usées, au moyen d'un lit de filtration qui consiste en des particules filtrantes granulaires, par exemple du sable, et est animé d'un mouvement vers le bas dans un espace annulaire cylindrique dressé verticalement, délimité par des parois perméables aux liquides, et débouchant dans une chambre conique d'évacuation à parois imperméables aux liquides, procédé dans lequel le liquide est admis dans l'espace annulaire a travers la paroi interne, et traverse le lit de filtration sur toute sa hauteur, transversalement par rapport au mouvement de ce dernier, les particules filtrantes étant évacuées de la chambre conique au moyen d'une pompe mammouth (dispositif de levage par air comprimé) pour être de nouveau dirigées vers la face supérieure du lit de filtration, et un lit tourbillonnaire étant engendré, dans la chambre conique d'évacuation, par admission d'eau, présentant les caractéristiques suivantes:

un tissu de tamisage d'une largeur de mailles de 10 à 200 µm est disposé, en tant que microfiltre, contre la paroi interne de l'espace annulaire cylindrique, les particules de crasse lourdes et floculées, se déposant sur ce microfiltre, sont évacuées vers le bas et introduites, dans la chambre conique d'évacuation, dans le lit de filtration s'écoulant,

le microfiltre est nettoyé en permanence hydrauliquement a partir de la cavité intérieure, et la pompe mammouth est actionnée par délivrance saccadée d'air comprimé.

2. Procédé selon la revendication 1, caractérisé par le fait que le microfiltre est aspergé, sur toute sa hauteur, par des jets d'eau sortant de buses rotatives.

3. Procédé selon la revendication 1 ou 2, caractérisé par le fait que la quantité d'eau destinée à la génération du lit tourbillonnaire est limitée à la quantité d'eau nécessaire à l'acheminement et au lavage des particules filtrantes.

4. Appareil pour filtrer des liquides en continu, pour la mise en œuvre du procédé selon les revendications 1 à 3, présentant une région annulo-cylindrique (2) de la cuve, qui se dresse verticalement, est destinée à recevoir les particules filtrantes granulaires (32), dont les parois externe et interne (3, 4) sont réalisées perméables aux liquides, et qui est extérieurement entourée par une enveloppe (12) obturée à ses extrémités, à l'extrémité supérieure de laquelle est prévue une sortie (13) du liquide épuré, et dans laquelle une chambre conique d'évacuation (11), formée de deux parois infundibuliformes (9, 10), se raccorde à l'extrémité inférieure de l'espace annulaire, présentant les caractéristiques suivantes:

un tissu de tamisage (16) d'une largeur de mailles de 10 à 200 µm est disposé, en tant que microfiltre, sur la paroi interne de l'espace annulaire cylindrique,

des buses rotatives sont logées dans la cavité intérieure (15) de la région annulo-cylindrique (2) de la cuve, sur toute la hauteur du microfiltre, en vue d'asperger ce microfiltre,

une pompe mammouth (17) connue par elle-meme s'engage, par son extrémité inférieure d'aspiration, dans la région inférieure de la chambre conique d'évacuation (11),

un interstice annulaire (26) ouvert vers le bas est réservé, en tant qu'admission de boues, entre le tube extérieur (19) de la pompe mammouth (17) et la paroi infundibuliforme intérieure (10), l'inclinaison de la paroi infundibuliforme intérieure (10) est d'au moins 60°, et

un système (23, 25) à buse annulaire est disposé dans la paroi infundibuliforme extérieure (9), à son extrémité inférieure, en vue de l'admission d'eau.

5. Appareil selon la revendication 4, caractérisé par le fait qu'un certain nombre de tubes à axes parallèles, par exemple au nombre de trois, sont disposés dans la cavité intérieure (15) de la région annulo-cylindrique (2) de la cuve, sur toute la hauteur de ladite cavité intérieure (15), et sont fixés par leur extrémité supérieure à une étoile (27a) montée à rotation; par le fait qu'un certain nombre d'ajutages de pulvérisation (28), dirigés vers le tissu de tamisage (16), est ménagé sur les tubes (27), sur toute leur hauteur; et par le fait que les tubes (27) sont en communication, par l'entremise du tourniquet (27a), avec une canalisation d'arrivée (30) gagnant l'extérieur.

Figur 1

Figur 2

Figur 3

EP 0 291 538 B1

Figur 4